(19) Europäisches Patentamt / European Patent Office / Office européen des brevets

(11) **EP 2 956 818 B1**

(12) **EUROPEAN PATENT SPECIFICATION**

(45) Date of publication and mention
of the grant of the patent:
**27.09.2017 Bulletin 2017/39**

(21) Application number: **13724611.2**

(22) Date of filing: **24.05.2013**

(51) Int Cl.:
**G02C 7/08** *(2006.01)* **G02B 27/01** *(2006.01)*

(86) International application number:
**PCT/EP2013/060814**

(87) International publication number:
**WO 2014/124707 (21.08.2014 Gazette 2014/34)**

(54) **VARIABLE-POWER LENS**

VARIABLE-BRECHWERT LINSE

LENTILLE À PUISSANCE OPTIQUE VARIABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.02.2013 GB 201302719
18.02.2013 GB 201302792**

(43) Date of publication of application:
**23.12.2015 Bulletin 2015/52**

(73) Proprietor: **Adlens Limited
Eynsham, Oxfordshire OX29 4TP (GB)**

(72) Inventors:
• **NISPER, Jon**
**Eynsham**
**Oxfordshire**
**OX29 4TP (GB)**

• **STEVENS, Robert, Edward**
**Eynsham**
**Oxfordshire**
**OX29 4TP (GB)**

(74) Representative: **Crump, Julian Richard John et al
Beresford Crump LLP
16 High Holborn
London WC1V 6BX (GB)**

(56) References cited:
**WO-A1-2013/079312 WO-A2-2012/076840
US-A- 3 305 294 US-B1- 6 437 925**

• **OZAN CAKMAKCI ET AL: "Head-Worn Displays:
A Review", JOURNAL OF DISPLAY
TECHNOLOGY, IEEE SERVICE CENTER, NEW
YORK, NY, US, vol. 2, no. 3, 1 September 2006
(2006-09-01), pages 199-216, XP007911184, ISSN:
1551-319X, DOI: 10.1109/JDT.2006.879846**

EP 2 956 818 B1

## Description

This invention relates to a variable-power lens of the type comprising first and second lens elements one behind the other along an optical axis of the lens.

This type of lens finds a multitude of uses. One area where it is particularly useful is in spectacles for people with presbyopia. The use of variable-power lenses allows the wearer of the spectacles to compensate by adjusting the lenses for their eyes' inability to accommodate the difference in focal length required to focus on distant and near objects.

The variable-power lens invented by Alvarez and described in his US patent US 3,305,294 works on the principle of having two lens elements that slide over one another to adjust the lens power. It has many advantages for this type of scenario. In particular, it is relatively cost-effective to produce as the lens elements can be injection moulded. Furthermore, it is a simple arrangement, making it straightforward to assemble even in unspecialised manufacturing environments and it is easy for the user to adjust.

The use of variable power elements in the field of head mounted display is known from XP007911184, Table II, (c).

Recently, significant interest has developed in adapting eyewear such as spectacles to incorporate head-up display functionality. Owing to their simplicity, the Alvarez lens would appearto be an excellent choice for this type of application where variable lenses are required. There are complications involved with achieving the integration of head-up display functionality with Alvarez lenses, however.

These complications arise from the need to apply a diffractive structure to a lens surface in order to cause the head-up display to appear in front of the user's eye or eyes. Each element of the Alvarez lens typically has a planar surface and a curved surface. The elements are arranged so that the planar surfaces are together in between the two elements. The curved surfaces are outermost. It is difficult to apply a diffraction grating film to the curved surface nearest the user's eye because it is liable to wrinkle during application. Furthermore, the linear spacing of a diffractive structure such as a diffraction grating film will be upset by application to a curved surface, leading to distortion of the image. The inner, planar surfaces are also unsuitable because the image projected on them in this location will be distorted by refraction in the lens element, which is disposed between the planar surface and the user's eye.

In accordance with a first aspect of the invention, there is provided a variable-power lens for a pair of spectacles incorporating head-up display functionality, the lens comprising first and second lens elements one behind the other along an optical axis of the lens, each element having opposite planar and curved surfaces such that the thickness of each element in a direction parallel to the optical axis varies in a direction transverse the optical axis, the elements being relatively moveable in the transverse direction, whereby the power of the lens may be varied; wherein the elements are arranged such that the curved surface of the first element is adjacent the second element and the planar surface of the first element bears a diffractive pattern that is configured to diffract an image projected onto the diffractive pattern into a user's eye superimposed on an image visible to the user from refracted light passing through the lens.

By arranging the elements in this way, the planar surface of the first lens element is caused to lie on the outside of the compound lens structure formed by the first and second elements. The planar surface is therefore available to bear a diffractive structure onto which an image can be projected to produce a head-up display. The refractive power of the compound lens varies with relative movement of the two elements in precisely the same way in this configuration as with the two planar surfaces together. The above-mentioned problems with wrinkling of the film and distortion of the image caused by refraction in one lens element or due to curvature of the diffractive structure are however overcome.

Since the elements are arranged such that the curved surface of the first element is adjacent the second element, the curved surface of the first element is facing the second element and the planar surface of the first element faces away from the second element. The planar surface of the first element is therefore exposed on the outside of the pair of lens elements and is available to receive a diffractive pattern on which an image can be projected.

In a preferred embodiment, the curved and planar surfaces of one of the first and second elements are configured such that the thickness $t_1$ of the one element in the direction parallel to the optical axis is defined by the equation:

$$t_1 = A\left(xy^2 + \tfrac{1}{3}x^3\right) + Dx + E$$

and the curved and planar surfaces of the other of the second and first elements are configured such that the thickness $t_2$ of the other element in the direction parallel to the optical axis is defined by the equation:

$$t_2 = -A\left(xy^2 + \tfrac{1}{3}x^3\right) - Dx + E$$

wherein x and y represent co-ordinates with respect to an x-axis extending in the transverse direction and, respectively, a y-axis extending perpendicularly to the x-axis and the optical axis, A is a coefficient representing the rate of lens power variation with relative movement of the elements, D is a coefficient selected to control lens thickness, and E is a coefficient representing the lens thickness at the optical axis.

This preferred embodiment defines the usual Alvarez configuration. The coefficient D effectively defines a prism removed from each element to reduce, and preferably minimise, the overall lens thickness. The coefficient E must have a value large enough to ensure structural rigidity of the lens elements.

Typically, the second element is moveable and the first element is fixed. This prevents adjustment of the lens from disturbing an image projected on to the diffractive pattern. Because the diffractive pattern is borne by the first element, any movement of this relative to a projector would cause a disturbance.

The planar surface of the second element may face the first element.

In one embodiment, the diffractive pattern is provided by a diffraction grating film applied to the planar surface of the first element. This is very quick to manufacture and can be applied to existing production lines because an off-the-shelf diffraction grating film can be used.

In another embodiment, the diffractive pattern is formed in the planar surface of the first element. The diffractive pattern can be formed by moulding with the lens element itself or by embossing or grinding the lens element after it has been made. This embodiment allows for cheaper manufacture because the diffractive pattern can be formed with no additional manufacturing steps (when it is moulded).

However, it would require existing tooling to be modified or potentially replaced.

In this embodiment, a coating having the same refractive index as the first element may be applied to the planar surface of the first element in the region of the diffractive pattern. This prevents light passing through the first element from being refracted by the diffractive pattern and therefore renders it invisible to the user and any observers.

In yet another embodiment, the diffractive pattern is provided by an exit pupil expander or bulk hologram applied to the planar surface of the first element. The exit pupil expander is particularly beneficial as it causes the image to occupy a larger area, meaning that the relative positions of the user's eye and the diffractive pattern are less critical.

In accordance with a second aspect of the invention, there is provided a pair of spectacles comprising a frame supporting at least one variable-power lens according to the first aspect of the invention.

Typically, the at least one variable-power lens is coupled to a mechanism configured to move the first and second elements of the at least one variable-power lens relative to each other.

The pair of spectacles preferably further comprises a projector configured to project an image on to the diffractive pattern of the at least one variable-power lens. The projector may be mounted on a temple arm of the spectacles and arranged to project the image towards the surface of the at least one variable-power lens closest to the user's eye. Naturally, this will normally be the planar surface of the first element, which bears the diffractive pattern.

Two projectors may be provided if both lenses are in accordance with the first aspect of the invention.

The pair of spectacles may further comprise a camera configured to receive an image from the diffractive pattern of the at least one variable-power lens. The image will usually be of the user's eye so that the camera can be used to monitor the position of the user's eye, for example for eye-tracking purposes.

An embodiment of the invention will now be described with reference to the accompanying drawings, in which:

Figure 1 shows schematically an Alvarez lens;

Figure 2 shows schematically a variable-power lens according to the invention; and

Figure 3 shows a pair of spectacles comprising the lens of Figure 1.

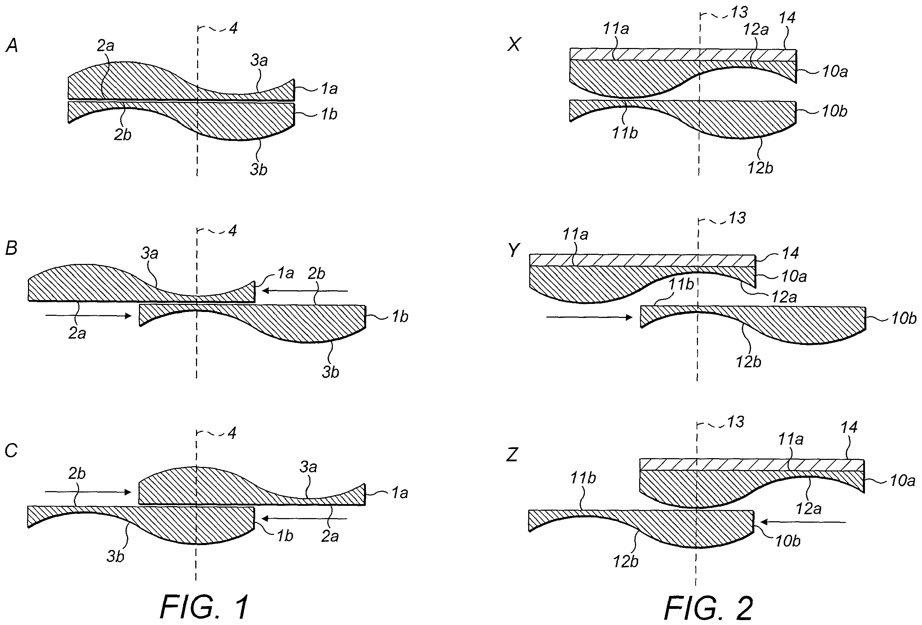

Figure 1 shows a conventional Alvarez lens. This does not relate directly to the invention and it is only shown for purposes of comparison. The lens is shown in three different configurations, labelled as A, B and C. The lens has two lens elements 1a, 1b. Each lens element 1a, 1b has a planar surface 2a, 2b and a curved surface 3a, 3b.

In configuration A, the two lens elements 1a, 1b of the Alvarez lens are in a neutral position. They are not offset with respect to each other transversely to the optical axis 4. As such the curved surfaces 3a, 3b are aligned and the contours follow each other. In this neutral position, the radii of curvature of the two surfaces at any position offset transversely from the optical axis are the same. The result is that the combination of the two lens elements 1a, 1b in this configuration provides no optical power (assuming that the thickness of the lens is small compared to the radii of curvature of the two curved surfaces 3a, 3b so that any contribution to the overall focal length of the lens caused by the lens thickness along the optical axis 4 can be neglected).

In configuration B, the lens elements 1a, 1b are offset transversely from the optical axis 4 as shown by the arrows. The curved surfaces 3a, 3b are no longer aligned and the combination of the two lens elements 1a, 1b has a similar form to a biconcave lens. The Alvarez lens in this configuration is therefore a diverging lens.

Configuration C is the converse to configuration B; the lens elements 1a, 1b are offset transversely from the optical axis 4 in the opposite directions to those of configuration B. Again, this is shown by the arrows. The combination of the two lens elements 1a, 1b now has a similar form to a biconvex lens, and the Alvarez lens has therefore now become a converging lens.

Figure 2 shows a variable-power lens according to the invention. In this lens, there are two lens elements 10a, 10b. The lens elements 10a, 10b may be made from any suitable lens material, such as crown or flint glass or an optical grade plastic, such as polycarbonate. The use of materials that can be moulded (e.g. polycarbonate or other suitable optical grade plastics) is preferable because it is difficult to grind the complex shape of the curved surfaces in glass.

Each lens element 10a; 10b has a planar surface 11a, 11b and a curved surface 12a, 12b. The surfaces 11a, 11b, 12a, 12b are configured such that the thicknesses of the respective lens elements 10a, 10b in the direction parallel to the optical axis are defined by the following two equations:

$$t_1 = A\left(xy^2 + \tfrac{1}{3}x^3\right) + Dx + E$$

and

$$t_2 = -A\left(xy^2 + \tfrac{1}{3}x^3\right) - Dx + E$$

In these, equations $t_1$ and $t_2$ are the thicknesses of the lens elements 10a, 10b respectively; x and y represent co-ordinates with respect to an x-axis extending in a direction transverse to the optical axis and, respectively, a y-axis extending perpendicularly to the x-axis and the optical axis; A is a coefficient representing the rate of lens power variation with relative movement of the lens elements 10a, 10b; D is a coefficient selected to control lens thickness; and E is a coefficient representing the lens thickness at the optical axis. The selection of suitable values for the coefficients A, D and E depends on various factors, including the overall dimension of the lens in the transverse direction. Those skilled in the art will be well aware how to choose suitable values for these coefficients without further instruction. US 3,305,294, for example, provides an explanation of how to choose suitable values.

As can be seen, the lens element 10a is oriented differently to the lens element 1a of Figure 1. Specifically, it is flipped on the optical axis 13 so that the curved surface 12a lies adjacent to the planar surface 11b. The lens of Figure 2 is shown in three configurations labelled as X, Y and Z, which correspond to the configurations A, B and C of Figure 1.

Thus, configuration X represents the neutral configuration. To the right-hand side of the optical axis 13, the lens element 10a effectively represents a planoconcave lens and lens element 10b effectively represents a planoconvex lens. The situation is reversed to the left-hand side of the optical axis 13 with the lens element 10a effectively representing a planoconvex lens and lens element 10b effectively representing a planoconcave lens. The radii of curvature of the two surfaces 12a, 12b at any position offset transversely from the optical axis 13 are the same. Thus, the two lens elements 10a, 10b complement each other and the resultant optical power is zero.

In configuration Y, the lens element 10b is shifted transversely to the optical axis 13 in the direction of the arrow. The lens element 10a is not moved. Thus, lens elements 10a and 10b both effectively represent planoconcave lenses. Thus, each lens element 10a, 10b acts as a diverging lens, and due to the proximity of the lens elements 10a, 10b along the optical axis 13, the optical powers of the two lens elements 10a, 10b are additive, with the result that the overall optical power is the sum of the optical powers of the two lens elements 10a, 10b.

In configuration Z, the lens element 10b is shifted transversely to the optical axis 13 in the direction of the arrow, which is the opposite direction to that of the arrow of configuration Y. The lens element 10a is not moved. Thus, lens elements 10a and 10b both effectively represent planoconvex lenses. Thus, each lens element 10a, 10b acts as a converging lens, and due to the proximity of the lens elements 10a, 10b along the optical axis 13, the optical powers of the two lens elements 10a, 10b are additive, with the result that the overall optical power is the sum of the optical powers of the two lens elements 10a, 10b.

As can be seen, the arrangement of the two lens elements 10a, 10b in Figure 2 is able to produce the same variation in optical power with relative movement of the two lens elements in a direction transverse to the optical axis 13 as the Alvarez lens arrangement shown in Figure 1. However, because the lens element 10a is flipped on the optical axis 13, the planar surface 11a of the lens element 10a is exposed on the outside of the compound lens formed by lens elements 10a, 10b. This enables a diffractive pattern to be applied to the planar surface 11a. In the embodiment shown in Figure 2, this is in the form of a diffraction grating film 14 applied across the planar surface 11a.

In other embodiments, the diffraction grating film may be applied only to a region of the planar surface 11a. The diffraction grating film may also be replaced by an exit pupil expander, which causes a diffracted image to occupy a larger area, meaning that the relative positions of the user's eye and the diffractive pattern are less critical. Alternatively, a diffractive pattern may be formed directly in the planar surface 11a by moulding the pattern into the surface when the lens element 10a is made. In this case, the diffractive pattern will normally be covered with a coating or film, which has the same refractive index as the material from which lens element 10a is made. This prevents the diffractive pattern from being seen by the user. Thus, there is a very low diffraction when looking straight through the lens element 10a, although the diffractive pattern may still provide high diffraction efficiency for high order diffraction.

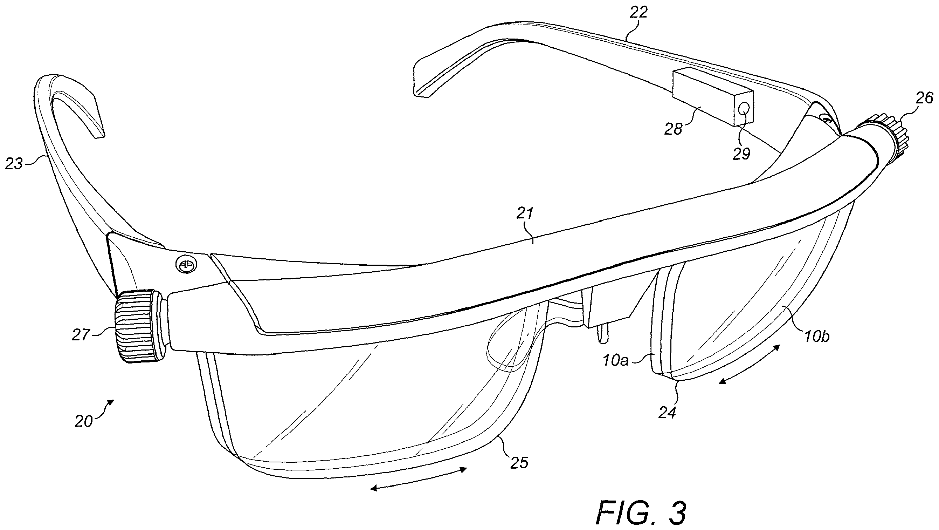

The presence of the diffraction grating film 14 on planar surface 11a enables a head-up display functionality to be combined with the variable-power lens of Figure 2. This will be explained with reference to Figure 3, which shows a pair of spectacles 20. The spectacles 20 comprise a frame made up of a bridge section 21 and a pair of temple arms 22 and 23.

A pair of variable-power lenses 24 and 25 are housed in the bridge section 21. Each pair of lenses is of the type shown in Figure 2, although the diffractive pattern may be omitted from lens 25. Indeed, lens 25 may be a conventional Alvarez lens of the type shown in Figure 1.

In the case of lens 24, the lens element 10a will be closest to the user's eye whilst the lens element 10b will be furthest from the user's eye. Thus, lens element 10a is behind lens element 10b in Figure 2. Lens element 10b is coupled to a thumbwheel 26, which enables the lens element 10b to be moved transversely to the optical axis whilst lens element 10a remains still. Lens element 10a is kept still because movement of the diffractive pattern 14 would disturb an image projected on to it. The thumbwheel 26 is coupled to a screw thread within the bridge section 21. Rotation of the thumbwheel 26 causes rotation of the screw thread, which drives the lens element 10b transversely across the optical axis 13 relative to lens element 10a. A similar mechanism is provided for lens 25, in which thumbwheel 27 causes the relative movement of the two lens elements of lens 25. In this case, either one or both of the lens elements of lens 25 may be moved.

A projector 28 is mounted on the temple arm 22. It comprises a miniature display, which projects an image through an aperture 29 towards the diffractive pattern 14 on lens element 10a on lens 24. The diffractive pattern is configured such that diffracted light will enter the user's eye and the image projected from projector 28 will be superimposed on the image visible to the user from refracted light passing through lens 24. The characteristics of the diffractive pattern 14 will need to be designed so that the light emitted by projector 28 is diffracted through the angle between the aperture 29 and the user's pupil. The skilled person would be well aware how to do this without explicit instruction as they will know that the angle through which light is diffracted by a diffraction grating is given by:

$$\theta_m = arcsin\left(\frac{m\lambda}{d} - sin\theta_i\right)$$

where $\theta_m$ is the angle of diffraction; m is the order of diffraction; A is the wavelength of light; d is the spacing between slits (or other diffractive features) in the diffractive pattern; and $\theta_i$ is the angle of incidence of the light from the projector 28. Given this equation, it is a straightforward matter to design a diffractive pattern by selecting a suitable value for d to cause light emitted by the projector 28 to be diffracted suitably so that the light will be diffracted into the user's pupil. In this embodiment, the diffraction grating is of course a reflective diffraction grating so that the light from the projector is reflected back towards the eye as well as diffracted through the correct angle as just discussed to cause the light to enter the user's pupil.

In other embodiments, the projector could be disposed alongside the diffractive pattern 14 rather than behind it as shown in Figure 3. In this case, the system can be arranged to use a transmissive diffraction grating rather than reflective, the light from the projector being emitted at a suitable angle to enter the diffraction grating at its interface with the lens element 10a.

As can be seen from the above equation, the diffraction angle differs for different wavelengths. In some embodiments the effects of this are minimised by using a projector that emits monochromatic light. The projector may be an organic light emitting diode (OLED) microdisplay.

In other embodiments, the projector may be replaced or augmented by a camera for monitoring the position of the user's eye for example, for eye-tracking purposes.

### Claims

1. A variable-power lens for a pair of spectacles incorporating head-up display functionality, the lens comprising first and second lens elements one behind the other along an optical axis of the lens, each element having opposite planar and curved surfaces such that the thickness of each element in a direction parallel to the optical axis varies in a direction transverse the optical axis, the elements being relatively moveable in the transverse direction, whereby the power of the lens may be varied; wherein the elements are arranged such that the curved surface of the first element is adjacent the second element, and the planar surface of the first element bears a diffractive pattern that is configured to diffract an image projected onto the diffractive pattern into a user's eye superimposed on an image visible to the user from refracted light passing through the lens.

2. A variable-power lens according to claim 1, wherein the curved and planar surfaces of one of the first and second elements are configured such that the thickness $t_1$ of the one element in the direction parallel to the optical axis is defined by the equation:

$$t_1 = A\left(xy^2 + \frac{1}{3}x^3\right) + Dx + E$$

and the curved and planar surfaces of the other of the second and first elements are configured such that the thickness $t_2$ of the other element in the direction parallel to the optical axis is defined by the equation:

$$t_2 = -A\left(xy^2 + \frac{1}{3}x^3\right) - Dx + E$$

wherein x and y represent co-ordinates with respect to an x-axis extending in the transverse direction and, respectively, a y-axis extending perpendicularly to the x-axis and the optical axis, A is a coefficient representing the rate of lens power variation with relative movement of the elements, D is a coefficient selected to control lens thickness, and E is a coefficient representing the lens thickness at the optical axis.

3. A variable-power lens according to claim 1 or claim 2, wherein the second element is moveable and the first element is fixed.

4. A variable-power lens according to any of the preceding claims, wherein the planar surface of the second element faces the first element.

5. A variable-power lens according to any of the preceding claims, wherein the diffractive pattern is provided by a diffraction grating film applied to the planar surface of the first element.

6. A variable-power lens according to any of claims 1 to 4, wherein the diffractive pattern is formed in the planar surface of the first element.

7. A variable-power lens according to claim 6, further comprising a coating having the same refractive index as the first element applied to the planar surface of the first element in the region of the diffractive pattern.

8. A variable-power lens according to any of claims 1 to 4, wherein the diffractive pattern is provided by an exit pupil expander or bulk hologram applied to the planar surface of the first element.

9. A pair of spectacles comprising a frame supporting at least one variable-power lens according to any of the preceding claims.

10. A pair of spectacles according to claim 9, wherein the at least one variable-power lens is coupled to a mechanism configured to move the first and second elements of the at least one variable-power lens relative to each other.

11. A pair of spectacles according to claim 9 or claim 10, further comprising a projector configured to project an image on to the diffractive pattern of the at least one variable-power lens.

12. A pair of spectacles according to any of claims 9 to 11, further comprising a camera configured to receive an image from the diffractive pattern of the at least one variable-power lens.

**Patentansprüche**

1. Linse variabler Brechkraft für eine Brille mit Head-Up-Anzeigefunktion, wobei die Linse ein erstes und ein zweites Linsenelement eines hinter dem anderen entlang der optischen Achse der Linse umfasst, von denen jedes Element einander gegenüberliegend eine plane und eine gekrümmte Fläche aufweist, so dass die in Richtung zur optischen Achse parallele Dicke jedes Linsenelements in Richtung quer zur optischen Achse variiert, wobei die Elemente in der Querrichtung zueinander beweglich sind, wodurch die Brechkraft der Linse geändert werden kann; wobei die Elemente so angeordnet sind, dass die gekrümmte Fläche des ersten Elements dem zweiten Element benachbart ist, und die plane Fläche des ersten Elements ein Beugungsmuster trägt, das eingerichtet ist, ein auf das Beugungsmuster projiziertes Bild in das Auge eines Benutzers zu beugen, wobei es einem Bild überlagert ist, das für den Benutzer aus durch die Linse hindurchgetretenem gebrochenen Licht sichtbar ist.

2. Linse variabler Brechkraft nach Anspruch 1, wobei die gekrümmte und die plane Fläche eines aus dem ersten und dem zweiten Element so eingerichtet sind, dass die Dicke $t_1$ des einen Elements in Richtung parallel zur optischen Achse von folgender Gleichung festgelegt ist:

$$t_1 = A\left(xy^2 + \frac{1}{3}x^3\right) + Dx + E$$

und die gekrümmte und die plane Fläche der anderen aus dem zweiten und dem ersten Element so eingerichtet sind, dass die Dicke $t_2$ des anderen Elements in Richtung parallel zur optischen Achse durch folgende Gleichung festgelegt ist:

$$t_2 = -A\left(xy^2 + \frac{1}{3}x^3\right) - Dx + E$$

wobei x und y Koordinaten sind, die sich entsprechenderweise auf eine in der Querrichtung verlaufende x-Achse und eine senkrecht zur x-Achse und zur optischen Achse verlaufende y-Achse beziehen, A ein Koeffizient ist, der die Rate der Variation der Linsenbrechkraft gegenüber der Relativbewegung der Elemente darstellt, D ein Koeffizient ist, der zur Steuerung der Linsendicke festgelegt ist, und E ein Koeffizient ist, der die Linsendicke auf der optischen Achse darstellt.

**3.** Linse variabler Brechkraft nach Anspruch 1 oder 2, wobei das zweite Element beweglich und das erste Element feststehend ist.

**4.** Linse variabler Brechkraft nach einem der vorhergehenden Ansprüche, wobei die plane Fläche des zweiten Elements dem ersten Element zugewandt ist.

**5.** Linse variabler Brechkraft nach einem der vorhergehenden Ansprüche, wobei das Beugungsmuster von einem Beugungsgitter-Film gebildet ist, der auf die plane Fläche des ersten Elements aufgebracht ist.

**6.** Linse variabler Brechkraft nach einem der Ansprüche 1 bis 4, wobei das Beugungsmuster in der planen Fläche des ersten Elements ausgebildet ist.

**7.** Linse variabler Brechkraft nach Anspruch 6, mit einer Beschichtung mit dem gleichen Brechungsindex wie das erste Element, die im Bereich des Beugungsmusters auf die plane Fläche des ersten Elements aufgebracht ist.

**8.** Linse variabler Brechkraft nach einem der Ansprüche 1 bis 4, wobei das Beugungsmuster von einem Austrittspupillenerweiterer oder einem Dickenhologramm bereitgestellt ist, die auf die plane Fläche des ersten Elements aufgebracht sind.

**9.** Brille mit einem Rahmen, der mindestens eine Linse variabler Brechkraft nach einem der vorhergehenden Ansprüche trägt.

**10.** Brille nach Anspruch 9, wobei die mindestens eine Linse variabler Brechkraft mit einem Mechanismus gekoppelt ist, der eingerichtet ist, das erste und das zweite Element der mindestens einen Linse variabler Brechkraft relativ zueinander zu bewegen.

**11.** Brille nach Anspruch 9 oder 10 mit einem Projektor, der zur Projektion eines Bilds auf das Beugungsmuster der mindestens einen Linse variabler Brechkraft eingerichtet ist.

**12.** Brille nach einem der Ansprüche 9 bis 11 mit einer Kamera, die zur Aufnahme eines Bilds von dem Beugungsmuster der mindestens einen Linse variabler Brechkraft eingerichtet ist.

**Revendications**

**1.** Lentille à puissance optique variable pour une paire de lunettes intégrant une fonctionnalité d'affichage tête haute, la lentille comprenant des premier et second éléments de lentille placés l'un derrière l'autre le long d'un axe optique de la lentille, chaque élément présentant des surfaces opposées plane et courbe de telle sorte que l'épaisseur de chaque élément dans une direction parallèle à l'axe optique varie dans une direction transversale par rapport à l'axe optique, les éléments étant mobiles l'un par rapport à l'autre dans la direction transversale, moyennant quoi la puissance de la lentille peut être modifiée, les éléments étant disposés de telle sorte que la surface courbe du premier élément soit voisine du second élément et que la surface plane dudit premier élément soit voisine du second élément, et la surface plane du premier élément portant un motif de diffraction qui est conçu pour diffracter une image projetée sur le motif de diffraction dans l'oeil d'un utilisateur, superposée sur une image visible de l'utilisateur à partir de la lumière réfractée qui traverse la lentille.

**2.** Lentille à puissance optique variable selon la revendication 1, dans laquelle les surfaces courbe et plane de l'un des premier et second éléments sont conçues de telle sorte que l'épaisseur $t_1$ dudit élément dans la direction parallèle à l'axe optique soit définie par l'équation :

$$t_1 = A \ (xy^2 + 1/3 \ x^3) + Dx + E$$

et les surfaces courbe et plane de l'autre des second et premier éléments sont conçues de telle sorte que l'épaisseur $t_2$ dudit autre élément dans la direction parallèle à l'axe optique soit définie par l'équation :

$$t_2 = -A \ (xy^2 + 1/3 \ x^3) - Dx + E,$$

dans laquelle x et y représentent respectivement des coordonnées par rapport à un axe x qui s'étend dans la direction transversale et à un axe y qui s'étend perpendiculairement à l'axe x et à l'axe optique, A un coefficient qui représente le degré de variation de puissance de la lentille avec le déplacement relatif des éléments, D un coefficient sélectionné pour commander l'épaisseur de la lentille, et E un coefficient qui représente l'épaisseur de la lentille au niveau de l'axe optique.

**3.** Lentille à puissance optique variable selon la revendication 1 ou la revendication 2, dans laquelle le second élément est mobile et le premier élément est fixe.

**4.** Lentille à puissance optique variable selon l'une quelconque des revendications précédentes, dans laquelle la surface plane du second élément se trouve en face du premier élément.

**5.** Lentille à puissance optique variable selon l'une quelconque des revendications précédentes, dans laquelle le motif de diffraction est défini par un film formant grille de diffraction qui est appliqué sur la surface plane du premier élément.

**6.** Lentille à puissance optique variable selon l'une quelconque des revendications 1 à 4, dans laquelle le motif de diffraction est formé dans la surface plane du premier élément.

**7.** Lentille à puissance optique variable selon la revendication 6, comprenant également un revêtement qui présente le même indice de réfraction que le premier élément appliqué sur la surface plane du premier élément dans la zone du motif de diffraction.

**8.** Lentille à puissance optique variable selon l'une quelconque des revendications 1 à 4, dans laquelle le motif de diffraction est défini par un extenseur de pupille de sortie ou par un hologramme de masse appliqué sur la surface plane du premier élément.

**9.** Paire de lunettes comprenant une monture qui porte au moins une lentille à puissance optique variable selon l'une quelconque des revendications précédentes.

**10.** Paire de lunettes selon la revendication 9, dans laquelle la ou les lentilles à puissance optique variable sont reliées à un mécanisme conçu pour déplacer l'un par rapport à l'autre les premier et second éléments de ladite lentille à puissance optique variable.

**11.** Paire de lunettes selon la revendication 9 ou la revendication 10, comprenant également un projecteur conçu pour projeter une image sur le motif de diffraction de la ou des lentilles à puissance optique variable.

**12.** Paire de lunettes selon l'une quelconque des revendications 9 à 11, comprenant également une caméra conçue pour recevoir une image à partir du motif de diffraction de la ou des lentilles à puissance optique variable.

*FIG. 2*

*FIG. 1*

FIG. 3

EP 2 956 818 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3305294 A